# EUROPÄISCHE PATENTSCHRIFT

(11) **EP 3 127 766 B1**
(45) Veröffentlichungstag und Bekanntmachung des Hinweises auf die Patenterteilung: **03.07.2019**
(21) Anmeldenummer: 16181228.4
(22) Anmeldetag: 26.07.2016
(51) Int. Cl.: B60T 7/10

(54) **GEBEREINHEIT**
MASTER CYLINDER UNIT
UNITÉ MAÎTRE CYLINDRE

(30) Priorität: 04.08.2015 DE 102015112801
(43) Veröffentlichungstag der Anmeldung: 08.02.2017
(73) Patentinhaber: Gustav Magenwirth GmbH & Co. KG, 72574 Bad Urach (DE)
(72) Erfinder: Ruopp, Michael, 89180 Berghülen (DE)
(74) Vertreter: Hoeger, Stellrecht & Partner Patentanwälte mbB

(56) Entgegenhaltungen:
- EP-A1- 0 368 120
- EP-A2- 1 894 802
- WO-A2-2014/111544

## Beschreibung

Die Erfindung betrifft eine Gebereinheit für Fahrzeuge, insbesondere für lenkergeführte Fahrzeuge, umfassend ein Gehäuse, eine in dem Gehäuse vorgesehene Geberzylindereinheit, eine Betätigungseinheit zur manuellen Betätigung der Geberzylindereinheit mit einem relativ zu dem Gehäuse um eine Druckhebelschwenkachse schwenkbaren Druckhebel und mit einem eine Bewegung des Druckhebels auf die Geberzylindereinheit übertragenden Druckelement, das an dem Druckhebel vorgesehen ist und das bei der manuellen Betätigung der Betätigungseinheit mit einer Druckfläche an einer Einwirkungsstelle auf eine Einwirkungsfläche der Geberzylindereinheit einwirkt.

Derartige Gebereinheiten sind aus dem Stand der Technik, beispielsweise der WO 2014/111544 A2 und EP 1 894 802 A2, bekannt.

Bei diesen bekannten Gebereinheiten besteht jedoch keine Möglichkeit, diese in geeigneter Weise an die Haptik einer Bedienungsperson anzupassen.

Der Erfindung liegt daher die Aufgabe zugrunde, eine Gebereinheit der eingangs beschriebenen Art dahingehend zu verbessern, dass eine optimale Anpassung an die jeweiligen Gegebenheiten möglich ist.

Diese Aufgabe wird bei einer Gebereinheit der eingangs beschriebenen Art erfindungsgemäß dadurch gelöst, dass zur Einstellung eines Übersetzungsverhältnisses der Betätigungseinheit, mit welchem die Betätigungseinheit auf die Geberzylindereinheit wirkt, ein bei der Betätigung wirksamer Hebelarm zwischen der Einwirkungsstelle und der Druckhebelschwenkachse mittels einer Einstelleinrichtung einstellbar ist, dass die Einstelleinrichtung an der Betätigungseinheit angeordnet ist, und dass ein Abstand der Einwirkungsstelle von der Druckhebelschwenkachse mittels der Einstelleinrichtung einstellbar ist.

Der Vorteil dieser Lösung ist darin zu sehen, dass mit dieser die Möglichkeit besteht, die Wirkungsweise der erfindungsgemäßen Gebereinheit optimal an die Haptik der jeweiligen Bedienungsperson anzupassen.

Insbesondere besteht bei der erfindungsgemäßen Lösung auch die Möglichkeit, die Einstelleinrichtung so auszubilden, dass der bei der Betätigung wirksame Hebelarm zwischen der Einwirkungsstelle und der Druckhebelschwenkachse ohne Beeinflussung einer Ausgangsstellung der Geberzylindereinheit und/oder der Betätigungseinheit angepasst werden kann.

Gemäß der Erfindung erfolgt somit keine Änderung der Lage oder Ausrichtung des Druckhebels relativ zur Gebereinheit sondern eine einfach realisierbare Änderung des Abstandes der Einwirkungsstelle von der Druckhebelschwenkachse.

Insbesondere ist dabei vorgesehen, dass mittels der Einstelleinrichtung die Druckfläche des Druckelements und die Druckhebelschwenkachse relativ zueinander positionierbar und somit einstellbar sind, d.h., ein Abstand derselben veränderbar ist.

Prinzipiell könnte dabei eine Bewegbarkeit der Druckhebelschwenkachse relativ zum Druckhebel vorgesehen sein.

Eine besonders vorteilhafte Ausführungsform der Einstelleinrichtung sieht vor, dass mittels dieser die Lage des Druckelements relativ zum Druckhebel einstellbar ist.

Eine derartige Einstellbarkeit der Lage des Druckelements relativ zum Druckhebel hat den Vorteil, dass die schwenkbare Lagerung des Druckhebels am Gehäuse unbeeinflusst bleiben kann und lediglich im Bereich des Druckhebels die Lage des Druckelements entsprechend der gewünschten Bedienbarkeit variiert wird.

Insbesondere ist es günstig, wenn mittels der Einstelleinrichtung der Abstand der Einwirkungsstelle von der Druckhebelschwenkachse bei unverändert in einer vorgegebenen Ausgangsstellung stehender Geberzylindereinheit einstellbar ist.

Diese Lösung hat den großen Vorteil, dass sie bei der Veränderung des Übersetzungsverhältnisses die Ausgangsstellung der Geberzylindereinheit unbeeinflusst bleibt.

Eine besonders vorteilhafte Lösung sieht ferner vor, dass eine durch die Druckfläche in der Ausgangsstellung der Geberzylindereinheit beaufschlagbare Einwirkungsfläche der Geberzylindereinheit eine quer zu einer Mittelachse der Geberzylindereinheit verlaufende Fläche, insbesondere eine ebene Fläche, ist.

Mit einer derartigen Ausbildung der Einwirkungsfläche lässt sich in konstruktiv besonders vorteilhafter Weise die Einstellung des Übersetzungsverhältnisses mittels der Einstelleinrichtung realisieren.

Vorzugsweise ist dabei die Einstelleinrichtung so ausgebildet, dass bei einer Veränderung des Abstandes der Einwirkungsstelle relativ zur Druckhebelschwenkachse die Einwirkungsstelle parallel zur Einwirkungsfläche wandert, wobei die Geberzylindereinheit in ihrer Ausgangsstellung steht.

Diese Lösung eröffnet somit die Möglichkeit das Übersetzungsverhältnis der Betätigungseinheit unabhängig von anderen Einstellungen, beispielsweise der Griffweite oder einer Festlegung der Ausgangsstellung zur Festlegung des Ansprechverhaltens eines Hydrauliksystems, umfassend die Gebereinheit und eine Nehmereinheit, einzustellen.

Hinsichtlich der Anordnung der Einstelleinrichtung wurden im Zusammenhang mit den bisherigen Ausführungen keine näheren Angaben gemacht.

So sieht eine besonders vorteilhafte Lösung vor, dass die Einstelleinrichtung im Abstand von der Einwirkungsfläche der Geberzylindereinheit angeordnet ist.

Insbesondere ist vorzugsweise vorgesehen, dass die Einstelleinrichtung auf einer der Geberzylindereinheit abgewandten Seite des Druckelements angeordnet ist und dass sich das Druckelement von der Einstelleinrichtung zur Einwirkungsfläche hin erstreckt.

Die Einstelleinrichtung kann in unterschiedlichster Art und Weise ausgebildet sein.

Eine vorteilhafte Lösung sieht vor, dass die Einstelleinrichtung einen Führungskörper umfasst, der an einer am Druckhebel vorgesehenen Führungsaufnahme in einer Führungsrichtung bewegbar geführt ist.

Durch eine derartige Längsführung besteht eine einfache Möglichkeit, das Druckelement in geeigneter Weise relativ zur Druckhebelschwenkachse zu positionieren.

Dabei könnte eine die vorstehend beschriebene Längsführung einen gebogenen Verlauf der Führungsaufnahme aufweisen.

Eine besonders einfache Realisierung einer derartigen Längsführung sieht vor, dass die Führungsaufnahme und der Führungskörper eine Linearführung bilden.

Um zu erreichen, dass möglichst keine Veränderung der Ausgangsstellung bei der Einstellung des Übersetzungsverhältnisses erfolgt, ist vorzugsweise vorgesehen, dass die Führungsrichtung ungefähr parallel zu einer durch die Einwirkungsfläche definierten Fläche verläuft.

Konstruktiv besonders einfach lässt sich eine Führung des Druckelements realisieren, wenn die Führungsrichtung ungefähr parallel zu einer senkrecht zur Mittelachse des Geberzylinders verlaufenden Ebene ausgerichtet ist, wobei in diesem Fall insbesondere die Einwirkungsfläche in einer senkrecht zur Mittelachse verlaufenden Ebene liegt.

Um den Führungskörper in der Führungsrichtung bewegen und in der jeweiligen Stellung festlegen zu können, ist vorzugsweise vorgesehen, dass der Führungskörper durch ein Stellelement in der Führungsrichtung bewegbar ist.

Das Stellelement kann grundsätzlich in unterschiedlichster Art und Weise ausgebildet sein.

Beispielsweise könnte das Stellelement eine Kurvenbahn aufweisen, welche auf den Führungskörper wirkt.

Eine besonders einfache Lösung sieht vor, dass das Stellelement eine Stellspindel umfasst, die mit einem Spindelmutterabschnitt zusammenwirkt, wobei insbesondere die Stellspindel mit dem Führungskörper oder dem Druckhebel und der Spindelmutterabschnitt mit dem Druckhebel oder dem Führungskörper zusammenwirkt.

Eine derartige Stellspindel stellt eine einfach zu realisierende Möglichkeit dar, um den Führungskörper einerseits zu bewegen und andererseits in der jeweiligen gewünschten Stellung festzulegen.

Besonders vorteilhaft ist es dabei, wenn das Stellelement einen Ringkörper aufweist, der auf den Führungskörper dahingehend einwirkt, dass dieser in der Führungsrichtung definiert, insbesondere in verschiedenen Positionen, positionierbar ist.

Besonders günstig ist es dabei, wenn der Führungskörper durch den Ringkörper in beiden einander entgegengesetzten und in der Führungsrichtung verlaufenden Bewegungsrichtungen festlegbar ist, so dass jeweils der Führungskörper in einfacher Weise durch das Stellelement positionierbar ist.

Für das Zusammenwirken des Ringkörpers und des Führungskörpers sind die unterschiedlichsten Realisierungsformen denkbar.

Eine konstruktiv besonders einfache Realisierungsform sieht vor, dass der Ringkörper in einen Ausschnitt des Führungskörpers eingreift und dadurch in der Lage ist, diesen in den gewünschten Stellungen zu positionieren.

Um ferner zu verhindern, dass das Stellelement selbst seine Stellung, insbesondere seine Drehstellung, verändert, ist vorzugsweise vorgesehen, dass das Stellelement durch eine Rasteinheit in jeder der verschiedenen Stellungen festlegbar ist.

Die Rasteinheit kann ebenfalls in unterschiedlichster Art und Weise ausgebildet sein.

Vorzugsweise ist vorgesehen, dass der Ringkörper mindestens eine Rastvertiefung aufweist, in welche mindestens ein Rastelement eingreift.

Zur variablen Einstellung der Ausgangsstellung des Kolbens der Geberzylindereinheit ist bei einer Alternativlösung das Druckelement mit der Druckfläche relativ zum Führungskörper bewegbar und somit ein Abstand der Druckfläche vom Führungskörper einstellbar.

Hierzu ist beispielsweise eine Stelleinheit vorgesehen, die zusammenwirkende Stellgewinde umfasst.

Vorzugsweise umfasst das Druckelement ein umfangsseitiges Stellgewinde, welches mit einem Stellgewinde des Führungskörpers in Eingriff ist, so dass eine Relativdrehung der Stellgewinde ein Verstellen des Druckelements relativ zum Führungskörper ermöglicht.

Alternativ zum Ausbilden der Einstelleinrichtung unter Verwendung eines Führungskörpers mit einer Führungsaufnahme sieht eine weitere vorteilhafte Lösung vor, dass die Einstelleinrichtung einen am Betätigungshebel gelagerten Schwenklagerkörper umfasst, durch welchen das Druckelement um eine Einstellachse schwenkbar und in der jeweiligen Schwenkstellung positionierbar ist.

Dabei könnte das Druckelement in unterschiedlichster Art und Weise ausgebildet sein.

Eine vorteilhafte Lösung sieht dabei vor, dass sich das Druckelement radial zum Schwenklagerkörper erstreckt.

Um das Druckelement in den verschiedenen Schwenkpositionen festlegen zu können, ist vorzugsweise vorgesehen, dass die Schwenkposition des Druckelements um die Einstellachse durch ein auf einen drehfest mit dem Schwenklagerkörper verbundenen Anschlagarm einwirkendes Stellelement festlegbar ist.

Hinsichtlich der Realisierung des Anschlagarms bestehen ebenfalls verschiedene Möglichkeiten.

Beispielsweise kann der Anschlagarm an dem Schwenklagerkörper gehalten sein.

Eine weitere vorteilhafte Lösung sieht vor, dass der Anschlagarm durch einen den Schwenklagerkörper durchsetzenden Führungszapfen des Druckelements gebildet ist, so dass ein besonders einfacher Aufbau realisierbar ist.

Ferner ist vorzugsweise vorgesehen, dass das Druckelement radial zum Schwenklagerkörper an diesem bewegbar geführt ist, um dadurch die Möglichkeit zu haben, die Bewegung der Druckfläche bei der Einstellung der verschiedenen Hebelverhältnisse abweichend von einer Kreisbahn um die Schwenkachse des Schwenklagerkörpers vorgeben zu können.

Insbesondere ist vorgesehen, dass das Druckelement hinsichtlich seiner Bewegbarkeit radial zum Schwenklagerkörper durch eine am Druckhebel angeordnete Kulissenbahn abgestützt ist.

Mit einer derartigen Kulissenbahn lässt sich somit die Bahn vorgeben, auf welcher die Druckfläche beim Einstellen der verschiedenen Übersetzungsverhältnisse wandert.

Insbesondere ist dabei vorgesehen, dass die Kulissenbahn derart ausgebildet ist, dass diese das Druckelement derart positioniert, dass die Einwirkungsstelle beim Verändern der Schwenkstellungen sich näherungsweise parallel zur Einwirkungsfläche, insbesondere parallel zu einer durch die Einwirkungsfläche vorgesehenen geometrischen Ebene bewegt.

Hinsichtlich der gesamten Ausbildung der Betätigungseinheit in Ergänzung des Druckhebels wurden bislang keine näheren Angaben gemacht.

Im einfachsten Fall könnte der Druckhebel selbst so ausgebildet sein, dass er einen Griffbereich aufweist.

Eine besonders günstige Lösung sieht jedoch vor, dass die Betätigungseinheit einen Betätigungshebel aufweist, der einen Griffbereich zur manuellen Einwirkung auf die Betätigungseinheit umfasst und dass bei manueller Einwirkung auf den Betätigungshebel dieser auf den Druckhebel im Sinne einer Betätigung der Geberzylindereinheit einwirkt.

Das heißt, dass bei dieser Lösung der Betätigungshebel nicht identisch mit dem Druckhebel und insbesondere auch nicht einstückig mit dem Druckhebel ausgebildet ist.

Vorzugsweise ist der Betätigungshebel relativ zum Druckhebel bewegbar, insbesondere verschwenkbar.

Prinzipiell bestünde die Möglichkeit, den Betätigungshebel um dieselbe Schwenkachse schwenkbar am Gehäuse zu lagern wie den Druckhebel.

Eine derartige Lösung ist beispielsweise in der DE 10 2013 200 824 A1 beschrieben.

Eine besonders zweckmäßige Lösung sieht jedoch vor, dass der Druckhebel mit einem ersten Endbereich um die Druckhebelschwenkachse an dem Gehäuse schwenkbar gelagert ist und dass der Druckhebel sich bis zu einem zweiten Endbereich erstreckt, an welchem der Betätigungshebel bewegbar, insbesondere schwenkbar, gelagert ist.

Um bei einer derartigen Anordnung des Betätigungshebels die Griffweite einstellen zu können, ist vorzugsweise vorgesehen, dass eine Ausrichtung des Betätigungshebels relativ zum Druckhebel durch eine Griffweitenverstelleinrichtung einstellbar ist.

Insbesondere erfolgt eine derartige Einstellung der Griffweite bei manuell unbetätigter Betätigungseinheit.

Dabei ist die Griffweite durch einen Abstand des Griffbereichs des Betätigungshebels von dem Lenker definiert.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Gebereinheit (10) für Fahrzeuge, insbesondere für lenkergeführte Fahrzeuge, umfassend ein Gehäuse (14), eine in dem Gehäuse (14) vorgesehene Geberzylindereinheit (22), eine Betätigungseinheit (52) zur manuellen Betätigung der Geberzylindereinheit (22) mit einem relativ zu dem Gehäuse (14) um eine Druckhebelschwenkachse (62) schwenkbaren Druckhebel (54) und mit einem eine Bewegung des Druckhebels (54) auf die Geberzylindereinheit (22) übertragenden Druckelement (72), das an dem Druckhebel (54) vorgesehen ist und das bei der manuellen Betätigung der Betätigungseinheit (52) mit einer Druckfläche (74) an einer Einwirkungsstelle (76) auf eine Einwirkungsfläche (38) der Geberzylindereinheit (22) einwirkt, dadurch gekennzeichnet, dass zur Einstellung eines Übersetzungsverhältnisses der Betätigungseinheit (52), mit welchem die Betätigungseinheit (52) auf die Geberzylindereinheit (22) wirkt, ein bei der Betätigung wirksamer Hebelarm zwischen der Einwirkungsstelle (76) und der Druckhebelschwenkachse (62) mittels einer Einstelleinrichtung (92) einstellbar ist, dass die Einstelleinrichtung (92) an der Betätigungseinheit (52) angeordnet ist und dass ein Abstand (A) der Einwirkungsstelle (76) von der Druckhebelschwenkachse (62) mittels der Einstelleinrichtung (92) einstellbar ist.
2. Gebereinheit nach Ausführungsform 1, dadurch gekennzeichnet, dass mittels der Einstelleinrichtung (92) die Druckfläche (74) des Druckelements (72) und die Druckhebelschwenkachse (62) relativ zueinander positionierbar sind.
3. Gebereinheit nach einer der voranstehenden Ausführungsformen, dadurch gekennzeichnet, dass mittels der Einstelleinrichtung (92) die Lage des Druckelements (72) relativ zum Druckhebel (54) einstellbar ist.
4. Gebereinheit nach einer der voranstehenden Ausführungsformen, dadurch gekennzeichnet, dass mittels der Einstelleinrichtung (92) der Abstand (A) der Einwirkungsstelle (76) von der Druckhebelschwenkachse (62) bei unverändert in einer Ausgangsstellung stehender Geberzylindereinheit (22) einstellbar ist.
5. Gebereinheit nach einer der voranstehenden Ausführungsformen, dadurch gekennzeichnet, dass eine durch die Druckfläche (74) in der Ausgangsstellung der Geberzylindereinheit (22) beaufschlagbare Einwirkungsfläche (38) der Geberzylindereinheit (22) eine quer zu einer Mittelachse (26) der Geberzylindereinheit (22) verlaufende Fläche ist.
6. Gebereinheit nach einer der voranstehenden Ausführungsformen, dadurch gekennzeichnet, dass die Einstelleinrichtung (92) so ausgebildet ist, dass bei einer Veränderung des Abstandes (A) der Einwirkungsstelle (76) relativ zur Druckhebelschwenkachse (62) die Einwirkungsstelle (76) parallel zur Einwirkungsfläche (38) wandert, wobei die Geberzylindereinheit (22) in ihrer Ausgangsstellung steht.
7. Gebereinheit nach einer der voranstehenden Ausführungsformen, dadurch gekennzeichnet, dass die Einstelleinrichtung (92) im Abstand von der Einwirkungsfläche (38) der Geberzylindereinheit (22) angeordnet ist.
8. Gebereinheit nach einer der voranstehenden Ausführungsformen, dadurch gekennzeichnet, dass die Einstelleinrichtung (92) auf einer der Geberzylindereinheit (22) abgewandten Seite des Druckelements (72) angeordnet ist und dass sich das Druckelement (72) von der Einstelleinrichtung (92) zur Einwirkungsfläche (38) hin erstreckt.
9. Gebereinheit nach einer der voranstehenden Ausführungsformen, dadurch gekennzeichnet, dass die Einstelleinrichtung (92) einen Führungskörper (94) umfasst, der an einer am Druckhebel (54) vorgesehenen Führungsaufnahme (96) in einer Führungsrichtung (98) bewegbar geführt ist.
10. Gebereinheit nach einer der voranstehenden Ausführungsformen, dadurch gekennzeichnet, dass die Führungsaufnahme (96) und der Führungskörper (94) eine Linearführung bilden.
11. Gebereinheit nach einer der voranstehenden Ausführungsformen, dadurch gekennzeichnet, dass die Führungsrichtung (98) ungefähr parallel zu einer durch die Einwirkungsfläche (38) definierten Fläche (E1) verläuft.
12. Gebereinheit nach Ausführungsform 11, dadurch gekennzeichnet, dass die Führungsrichtung (98) ungefähr parallel zu einer senkrecht zur Mittelachse (26) des Geberzylinders (22) verlaufenden Ebene (E1) ausgerichtet ist.
13. Gebereinheit nach einer der Ausführungsformen 9 bis 12, dadurch gekennzeichnet, dass der Führungskörper (94) durch ein Stellelement (112) in der Führungsrichtung (98) bewegbar ist.
14. Gebereinheit nach Ausführungsform 13, dadurch gekennzeichnet, dass das Stellelement (112) eine Stellspindel (114) umfasst, die mit einem Spindelmutterabschnitt (116) zusammenwirkt.
15. Gebereinheit nach Ausführungsform 14, dadurch gekennzeichnet, dass das Stellelement (112) einen Ringkörper (122) aufweist, der auf den Führungskörper (94) dahingehend einwirkt, dass dieser in der Führungsrichtung (98) definiert positionierbar ist.
16. Gebereinheit nach Ausführungsform 15, dadurch gekennzeichnet, dass der Führungskörper (94) durch den Ringkörper (122) in beiden einander entgegengesetzten und in der Führungsrichtung (98) verlaufenden Bewegungsrichtungen festlegbar ist.
17. Gebereinheit nach Ausführungsform 16, dadurch gekennzeichnet, dass der Ringkörper (122) in einen Ausschnitt (124) des Führungskörpers (94) eingreift.
18. Gebereinheit nach einer der Ausführungsformen 9 bis 17, dadurch gekennzeichnet, dass das Stellelement (112) durch eine Rasteinrichtung (148) in jeder der verschiedenen Stellungen festlegbar ist.
19. Gebereinheit nach Ausführungsform 18, dadurch gekennzeichnet, dass der Ringkörper (122) mindestens eine Rastvertiefung (152) aufweist, in welche mindestens ein Rastelement (154) eingreift.
20. Gebereinheit nach einer der Ausführungsformen 1 bis 8, dadurch gekennzeichnet, dass die Einstelleinrichtung (92") einen am Betätigungshebel (54) gelagerten Schwenklagerkörper (202) umfasst, durch welchen das Druckelement (72") um eine Einstellachse (204) schwenkbar ist.
21. Gebereinheit nach Ausführungsform 20, dadurch gekennzeichnet, dass sich das Druckelement (72") radial zum Schwenklagerkörper (202) erstreckt.
22. Gebereinheit nach Ausführungsform 20 oder 21, dadurch gekennzeichnet, dass die Schwenkposition des Druckelements (72") um die Einstellachse (204) durch ein auf einen drehfest mit dem Schwenklagerkörper (202) verbundenen Anschlagarm (224) einwirkendes Stellelement (212) festlegbar ist.
23. Gebereinheit nach Ausführungsform 22, dadurch gekennzeichnet, dass der Anschlagarm (224) durch einen den Schwenklagerkörper (202) durchsetzenden Führungszapfen (228) des Druckelements (72') gebildet ist.
24. Gebereinheit nach Ausführungsform 22 oder 23, dadurch gekennzeichnet, dass das Druckelement (72") radial zum Schwenklagerkörper (202) an diesem bewegbar geführt ist.
25. Gebereinheit nach Ausführungsform 24, dadurch gekennzeichnet, dass das Druckelement (72") hinsichtlich seiner Bewegbarkeit radial zum Schwenklagerkörper (202) durch eine am Druckhebel (54) angeordnete Kulissenbahn (234) abgestützt ist.
26. Gebereinheit nach Ausführungsform 25, dadurch gekennzeichnet, dass die Kulissenbahn (234) derart ausgebildet ist, dass die Kulissenbahn (234) das Druckelement derart positioniert, dass die Einwirkungsstelle (76) beim Verändern der Schwenkstellungen sich näherungsweise parallel zu der Einwirkungsfläche (38) bewegt.
27. Gebereinheit nach einer der voranstehenden Ausführungsformen, dadurch gekennzeichnet, dass die Betätigungseinheit (52) einen Betätigungshebel (56) aufweist, der einen Griffbereich (182) zur manuellen Einwirkung auf die Betätigungseinheit (52) umfasst, und dass bei manueller Einwirkung auf den Betätigungshebel (56) dieser auf den Druckhebel (54) im Sinne einer Betätigung der Geberzylindereinheit (22) einwirkt.
28. Gebereinheit nach Ausführungsform 27, dadurch gekennzeichnet, dass der Betätigungshebel (56) relativ zum Druckhebel (54) bewegbar ist.
29. Gebereinheit nach einer der voranstehenden Ausführungsformen, dadurch gekennzeichnet, dass der Druckhebel (54) mit einem ersten Endbereich (64) um die Druckhebelschwenkachse (62) an dem Gehäuse (14) schwenkbar gelagert ist und dass der Druckhebel (54) sich bis zu einem zweiten Endbereich (66) erstreckt, an welchem der Betätigungshebel (56) bewegbar gelagert ist.
30. Gebereinheit nach Ausführungsform 28, dadurch gekennzeichnet, dass eine Ausrichtung des Betätigungshebels (56) relativ zum Druckhebel (54) durch eine Griffweitenverstelleinrichtung (186) einstellbar ist.

Weitere Merkmale und Vorteile der Erfindung sind Gegenstand der nachfolgenden Beschreibung sowie der zeichnerischen Darstellung einiger Ausführungsbeispiele:
In der Zeichnung zeigen:
- Fig. 1: einen Längsschnitt durch eine erfindungsgemäße Gebereinheit;
- Fig. 2: eine vergrößerte Darstellung der Betätigungseinheit im selben Schnitt wie Fig. 1;
- Fig. 3: eine nochmals vergrößerte Darstellung der Betätigungseinheit mit dem Druckelement im Zusammenwirken mit einer Geberzylindereinheit in der Ausgangsstellung der Geberzylindereinheit;
- Fig. 4: einen Schnitt längs Linie 4-4 in Fig. 3;
- Fig. 5: einen Schnitt ähnlich Fig. 2 durch ein zweites Ausführungsbeispiel einer erfindungsgemäßen Gebereinheit und
- Fig. 6: einen Schnitt ähnlich Fig. 3 durch ein drittes Ausführungsbeispiel einer erfindungsgemäßen Gebereinheit.

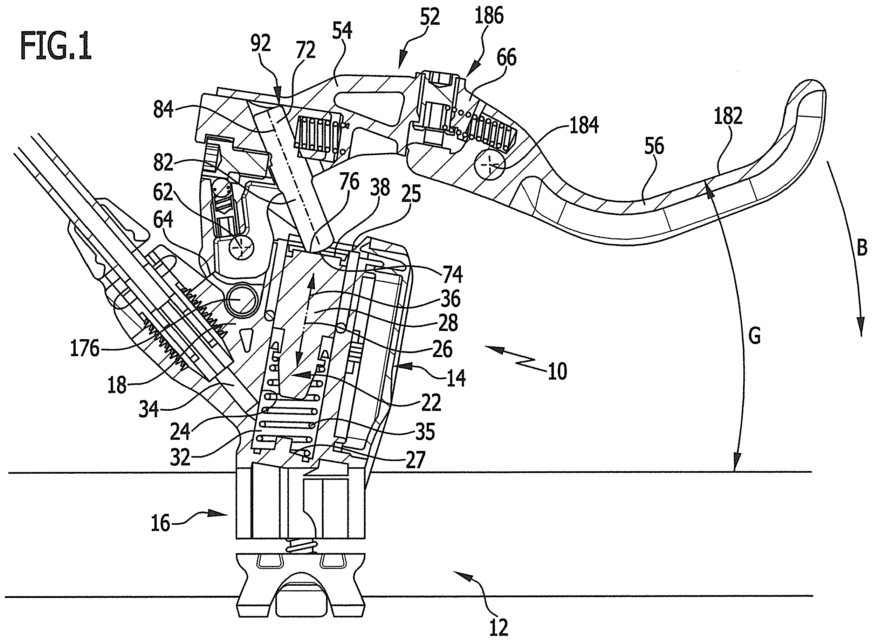

Ein in Fig. 1 dargestelltes erstes Ausführungsbeispiel einer erfindungsgemäßen Gebereinheit 10 für Fahrzeuge, insbesondere für lenkergeführte Fahrzeuge, umfasst ein an einem Lenker 12 des Fahrzeugs montierbares Gehäuse 14, welches eine an dem Lenker 12 fixierbare, insbesondere klemmenfixierbare Halteeinheit 16 aufweist.

Ferner umfasst das Gehäuse 14 einen Gehäusekörper 18, in welchem eine als Ganzes mit 22 bezeichnete Geberzylindereinheit angeordnet ist.

Die Geberzylindereinheit 22 wird dabei beispielsweise gebildet, durch eine in dem Gehäusekörper 18 vorgesehene Zylinderbohrung 24, welche sich längs einer Mittelachse 26 von einem offenen Ende 25 in den Gehäusekörper 18 hinein bis zu einem Abschluss 27 erstreckt und in welcher ein Kolben 28 in Richtung der Mittelachse 26 bewegbar geführt ist.

Die Zylinderbohrung 24, der Boden 25 und der Kolben 28 begrenzen dabei einen Druckraum 32, welcher ein Hydraulikmedium aufnimmt, das über einen in dem Gehäusekörper 18 vorgesehenen Anschluss 34 über eine Hydraulikleitung einer hydraulischen Nehmereinheit, beispielsweise einem Nehmerzylinder einer Bremseinheit, zuführbar ist.

Zur Betätigung der Geberzylindereinheit 22 ist der Kolben 28 mit einer Einwirkungsfläche 38 versehen, welche vorzugsweise quer, bzw. senkrecht zu einer zur Mittelachse 26 parallel umlaufenden Bewegungsrichtung 36 des Kolbens 28 verläuft.

Der Kolben 28 ist mit einem sich am Abschluss 27 abstützenden Federelement 35 in Richtung einer durch ein Anschlagelement definierten Ausgangsstellung beaufschlagt, in welcher der Druckraum 32 sein maximales Volumen aufweist und in welcher der Kolben 28 nahe dem offenen Ende der Zylinderbohrung 24 steht.

Zur Betätigung der Geberzylindereinheit 22, insbesondere zur Einwirkung auf den Kolben 28, um diesen in der Bewegungsrichtung 36, insbesondere im Sinne einer Verkleinerung des Druckraums 32, zu bewegen, ist eine als Ganzes mit 52 bezeichnete Betätigungseinheit vorgesehen, welche einerseits einen Druckhebel 54 und andererseits einen Betätigungshebel 56 umfasst welcher manuell in einer Betätigungsrichtung B auf dem Lenker 12 zu bewegbar ist, um die Geberzylindereinheit 22 zu betätigen.

Bei dem dargestellten Ausführungsbeispiel ist der Druckhebel 54 um eine Druckhebelschwenkachse 62 an dem Gehäuse 14, insbesondere dem Gehäusekörper 18, schwenkbar gelagert, und zwar vorzugsweise mit einem ersten Ende 64 des Druckhebels 54, wobei sich der Druckhebel 54 vom ersten Ende 64 bis zu einem zweiten Ende 66 erstreckt, an welchem der Betätigungshebel 56 angreift.

Vorzugsweise erstreckt sich der Druckhebel 54 überwiegend auf einer der Geberzylindereinheit 22 abgewandten Seite einer hinsichtlich ihrer Lage durch die Einwirkungsfläche 38 definierten geometrischen Ebene E1.

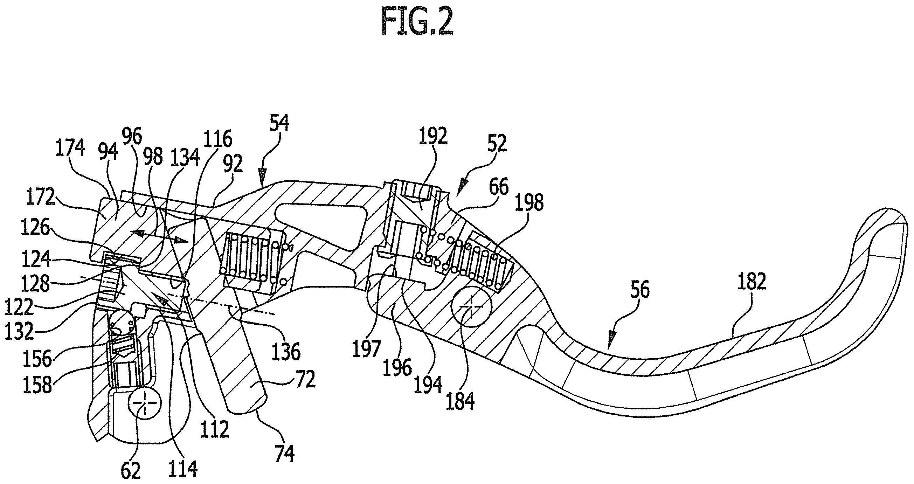

Zur Einwirkung auf die Einwirkungsfläche 38 der Geberzylindereinheit 22 ist der Druckhebel 54 mit einem als Ganzes mit 72 bezeichneten Druckelement versehen, welches, wie insbesondere in Fig. 2 dargestellt, endseitig eine Druckfläche 74 trägt, die vorzugsweise als gerundete oder gewölbte Fläche ausgebildet ist und die Einwirkungsfläche 38 im Bereich einer Einwirkungsstelle 76 bei der Beaufschlagung der Geberzylindereinheit 22 berührt.

Bei dem dargestellten Ausführungsbeispiel ist das Druckelement 72 beispielsweise als zylindrischer Stößel 82 ausgebildet, der sich ausgehend von dem Druckhebel 54 in Richtung der Einwirkungsfläche 38 erstreckt und stirnseitig die gewölbte Druckfläche 74 trägt, wobei der Stößel 82 eine quer zu seiner Mittelachse verlaufende Wölbung trägt.

Insbesondere verläuft die Druckfläche 74 bei einer vorteilhaften Ausführungsform des Stößels 82 mindestens in einer senkrecht zur Druckhebelschwenkachse 62 verlaufenden und das Druckelement 72 schneidenden geometrischen Ebene, welche der Zeichnungsebene in Fig. 1 bis Fig. 3 entspricht, gekrümmt.

Sofern die Druckfläche 74 des Stößels 82 in Richtung parallel zur Druckhebelschwenkachse 62 nur gering oder insbesondere gar nicht gewölbt ist, ist eine im Wesentlichen linienförmige Anlage auf der Einwirkungsfläche 38 erreichbar, die einen Verschleiß zwischen der Druckfläche 74 und der Einwirkungsfläche 38 minimiert.

Das Druckelement 72 ist durch eine als Ganzes mit 92 bezeichnete Einstelleinrichtung in seiner Lage relativ zum Druckhebel 54 derart einstellbar, dass die Einwirkungsstelle 76 auf der Einwirkungsfläche 38 der Geberzylindereinheit 22 in unterschiedlich großen radialen Abständen von der Druckhebelschwenkachse 62 positionierbar ist, um dadurch das Übersetzungsverhältnis zu ändern, mit welcher die Betätigungseinheit 52 bei in vorgegebenem Abstand von der Druckhebelschwenkachse 62 angeordnetem Betätigungshebel 56 auf die Geberzylindereinheit 22 einwirkt, da der Abstand A der Einwirkungsstelle 76 von der Druckhebelschwenkachse 62 den Hebelarm definiert, mit welchem die Betätigungseinheit 52 die Geberzylindereinheit 22 betätigt.

Bei Änderung des Abstandes A wandert die Einwirkungsstelle 76 relativ zur Druckhebelschwenkachse 62 und somit auch relativ zu der Mittelachse 26 der Zylinderbohrung 24 und somit auch des Kolbens 28, so dass die Einwirkungsstelle 76 beispielsweise zwischen einer Lage auf einer der Druckhebelschwenkachse 62 zugewandten Seite der Mittelachse 26 zu einer Lage auf einer der Druckhebelschwenkachse 62 abgewandten Seite der Mittelachse 26 oder umgekehrt wandern kann, wenn eine Variation des Abstandes A zur Änderung des Übersetzungsverhältnisses erfolgt.

Ein erstes Ausführungsbeispiel der hierzu vorgesehenen Einstelleinrichtung 92 umfasst einen Führungskörper 94, der in einer Führungsbohrung 96 im Druckhebel 54 in einer Führungsrichtung 98 bewegbar geführt ist, wobei die Führungsrichtung 98 in einer Ausgangsstellung des Kolbens 28 vorzugsweise ungefähr parallel zu einer durch die Druckhebelschwenkachse 62 und die Einwirkungsstelle 76 verlaufenden geometrischen Ebene E2 verläuft, wobei ein ungefähr paralleler Verlauf der Führungsrichtung 98 zur geometrischen Ebene E2 vorsieht, dass der Winkel, den die Führungsrichtung 98 mit der geometrischen Ebene E2 aufweist, im Bereich zwischen 0° und ungefähr 20° liegt.

Bei der Ausbildung des Druckelements 72 als Stößel 82 erstreckt sich dessen Mittelachse 84 quer zur Führungsrichtung 98, wobei hierzu beispielsweise der Stößel 82 in einer Querbohrung 106 des Führungskörpers 94 sitzt und sich ausgehend von diesem in Richtung der Einwirkungsfläche 38 erstreckt.

Damit ist die Druckfläche 74 des Druckelements 72 in der Führungsrichtung 98 bewegbar.

Die Führungsrichtung 98 liegt insbesondere in einer geometrischen Ebene, die quer, vorzugsweise senkrecht zur Druckhebelschwenkachse 62 verläuft, beispielsweise in der Zeichnungsebene der Fig. 1 bis 3.

Ferner sind die Führungsbohrung 96 und der Führungskörper 94 in einem Bereich des Druckhebels 54 angeordnet, der auf einer Seite der geometrischen Ebene E2 liegt, die der Seite der geometrischen Ebene E2 gegenüberliegt, auf welcher die Geberzylindereinheit 72 angeordnet ist.

Insbesondere liegt insbesondere die Einstelleinrichtung 92 mit dem Führungskörper 94 und der Führungsbohrung 96 auf einer der Geberzylindereinheit 22 gegenüberliegenden Seite der geometrischen Fläche E1, die senkrecht zur Mittelachse 26 der Geberzylindereinheit 22 verläuft und in welcher sich die Einwirkungsfläche 38 des in unbetätigter Ausgangsstellung stehenden Kolbens 28 erstreckt.

Ferner verläuft vorzugsweise die geometrische Ebene E1 parallel, insbesondere näherungsweise parallel, zur Führungsrichtung 98.

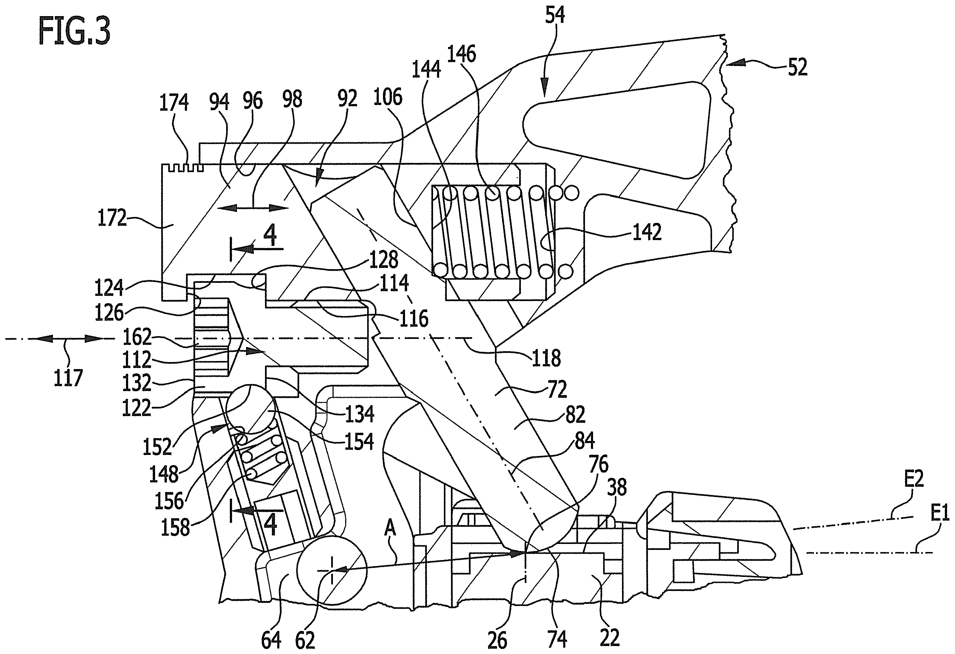

Zur Verschiebung des Führungskörpers 94 in der Führungsrichtung 98 ist, wie beispielsweise in Fig. 2 und Fig. 3 vergrößert dargestellt, ein Stellelement 112 vorgesehen, welches insbesondere selbsthemmend verstellbar ausgebildet ist und beispielsweise einen eine Stellspindel bildenden Außengewindeabschnitt 114 aufweist, der in eine parallel zur Führungsbohrung 96 verlaufende als Spindelmutter dienende Gewindebohrung 116 eingreift, so dass der Außengewindeabschnitt 114 die Stellspindel bildet, die in der Gewindebohrung 116 in Richtung 117 parallel zu ihrer Mittelachse 118 durch Drehen des Stellelements 112 bewegbar ist.

Vorzugsweise verläuft die Mittelachse 118 parallel zur Führungsrichtung 98.

Zum Verstellen des Führungskörpers 94 ist das Stellelement 112 mit einem radial zur Mittelachse 118 über den Außengewindeabschnitt 114 überstehenden Ringkörper 122 versehen, welcher mit einem Teilabschnitt seines Außenumfangs in einen Ausschnitt 124 in dem Führungskörper 94 eingreift, wobei der Ringkörper 122 in der Führungsrichtung 98 gesehen beiderseits an den Ausschnitt 124 begrenzenden und quer zur Führungsrichtung 98 verlaufenden Wandflächen 126 und 128 mit seinen quer zur Mittelachse 118 verlaufenden Ringflächen 132 und 134 anliegt, so dass der Ringkörper 122 den Führungskörper 94 durch die Wechselwirkung mit dem Ausschnitt 124 in der Führungsrichtung 98 definiert positioniert hält.

Durch Verdrehen des Stellelements 112 um die Mittelachse 118 als Drehachse sind somit der Außengewindeabschnitt 114 und der Ringkörper 122 gemeinsam in Richtung der Mittelachse 118 der Gewindebohrung 116 verstellbar, wodurch aufgrund der Kopplung mit dem Führungskörper 94 auch der Führungskörper 94 in der Führungsrichtung 98 bewegbar und in verschiedenen Positionen einstellbar ist, insbesondere ohne die Möglichkeit diese Positionen ohne manuelle Betätigung des Stellelements 112 zu verlassen, einstellbar ist.

Um aufgrund eines erforderlichen geringen Spiels zwischen dem Ringkörper 122 und dem Ausschnitt 124 eine Geräuschbildung im Betrieb zu vermeiden, ist vorzugsweise eine zwischen einem Boden 142 der Führungsbohrung 96 und einer dem Boden 142 zugewandten Beaufschlagungsfläche 144 des Führungskörpers 94 eine Druckfeder 146 angeordnet, die den Führungskörper 94 stets in einer Richtung beaufschlagt, beispielsweise so beaufschlagt, dass die Wandfläche 128 an der Ringfläche 134 anliegt.

Um zusätzlich noch einzelne Drehstellungen des Stellelements 112 gesichert festzulegen, ist eine Rasteinrichtung 148 vorgesehen.

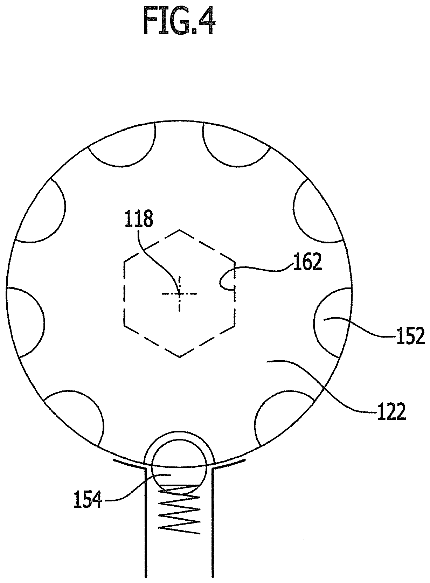

Zur Bildung derselben ist der Ringkörper 122, wie in Fig. 4 dargestellt, umfangseitig mit Rastvertiefungen 152 versehen, mit welchen ein Rastelement 154, beispielsweise eine Rastkugel in Eingriff bringbar ist, die in einer quer zu Mittelachse 118 des Stellelements 112 verlaufenden Rastelementführung 156, beispielsweise einer Führungsbohrung, geführt und durch eine Druckfeder 158 in Richtung des Ringkörpers 122 beaufschlagt ist.

Dabei ist das Stellelement 112, in den der Lage der Vertiefungen 152 entsprechenden Stellungen verrastbar und kann sich somit nicht selbständig, beispielsweise ausgelöst durch Vibrationen, verdrehen.

Damit wird eine einmal vorgegebene Drehstellung des Stellelements 112 und somit eine Position des Ringkörpers 122 in Richtung der Mittelachse durch die Rasteinrichtung 148 aufrecht erhalten, was dazu führt, dass durch die Kopplung des Führungskörpers 94 mit dem Stellelement 112 auch dessen Position, vorgegeben durch das Stellelement 112, in der Führungsrichtung 98 aufrechterhalten wird und somit auch ein einmal eingestellter Abstand der Einwirkungsstelle 76 von der Druckhebelschwenkachse 62 aufrechterhalten wird.

Zum Drehen des Stellelements 112 ist dieses beispielsweise mit einer Mehrkantausnehmung 162 versehen, welche zur Aufnahme eines dieser entsprechenden Mehrkantwerkzeugs zum Verdrehen des Stellelements 112 dient.

Um einer Bedienungsperson die Position des Führungskörpers 94 anzuzeigen ist vorzugsweise der Führungskörper 94 so ausgebildet, dass er mit einem Endabschnitt 172 über die Führungsbohrung 96 übersteht und an diesem Endabschnitt 72 Anzeigeelemente 174, beispielsweise konzentrisch zur Führungsrichtung 98 verlaufende Ringe, trägt, die erkennen lassen, wie weit der Führungskörper 94 über die Führungsbohrung 96 übersteht und somit erkennen lassen, in welcher Position der Führungskörper 94 in der Führungsrichtung 98 relativ zur Führungsbohrung 96 steht und somit einen Rückschluss darüber zulassen, in welchem Abstand A die Einwirkungsstelle 76 von der Druckhebelschwenkachse 62 liegt.

Durch die Einstellungseinrichtung 92 ist somit bei in der Ausgangsstellung stehender Geberzylindereinheit 22, insbesondere bei dem in der Ausgansstellung stehendem Kolben 28, eine Einstellung des Übersetzungsverhältnisses der Betätigungseinheit 52 möglich, ohne dass eine Betätigung der Geberzylindereinheit 22, d.h. eine Bewegung des Kolbens 28 aus der Ausgangsstellung heraus, erfolgt.

Vorzugsweise wird die Ausgangsstellung des Kolbens 28, durch welche ein Leerweg der Geberzylindereinheit 22 vorgebbar ist, durch ein Anschlagelement 176 vorgegeben, welche eine Schwenkbewegung des Druckhebels 54 in Richtung entgegengesetzt zu der Betätigungsrichtung B begrenzt.

Das Anschlagelement 176 kann dabei auch als Exzenter ausgebildet sein, so dass sich der Leerweg der Geberzylindereinheit 22 variabel einstellen lässt. Alternativ dazu ist es aber auch denkbar, an dem Gehäusekörper 18 einen Anschlag zur Festlegung der Ausgangsstellung des Kolbens 28 vorzusehen.

Um bei der erfindungsgemäßen Betätigungseinheit 52 noch zusätzlich eine Einstellung einer Griffweite G des Betätigungshebels 76, d.h. eine Einstellung des Abstandes eines Griffbereichs 182 von dem Lenker 12 zu ermöglichen, ist der Betätigungshebel 56 relativ zum Druckhebel 54 bewegbar.

Hierzu ist beispielsweise der Betätigungshebel 56 um eine Gelenkachse 184 schwenkbar an dem zweiten Ende 66 des Druckhebels 54 gelagert und durch eine Griffweitenverstelleinheit 186 einstellbar, wobei die Griffweitenverstelleinheit 186, wie insbesondere in Fig. 2 dargestellt, ein im zweiten Ende 66 des Druckhebels 54 angeordnetes Verstellelement 192 umfasst, welches eine Anschlagfläche 194 aufweist, gegen welche ein Anschlagarm 196 des Betätigungshebels 56 anliegt, wobei sich der Anschlagarm 196 des Betätigungshebels 56 beispielsweise auf einer dem Griffbereich 182 abgewandten Seite der Gelenkachse 184 erstreckt und somit durch den mit dem Verstellelement 192 verstellbaren Anschlag 194 eine Verschwenkbewegung des Betätigungshebels 56 relativ zum Druckhebel in Richtung des Lenkers 12 begrenzt.

Im einfachsten Fall ist das Verstellelement 192 eine gegebenenfalls mit einer Rastfunktion versehene Stellschraube, die mit ihrer Stirnseite einer Anschlagfläche 197 des dem Anschlagarms 196 zugewandten Anschlag 194 bildet.

Ferner ist zum ständigen in Anlage halten des Anschlagarms 196 am Anschlag 194 noch eine zwischen dem zweiten Ende 66 des Druckhebels 54 und dem Betätigungshebel 56 wirksame Druckfeder 198 vorgesehen, welche den Betätigungshebel 56 relativ zum Druckhebel 54 stets so beaufschlagt, dass der Anschlagarm 196 mit der Anschlagfläche 197 in Anlage am Anschlag 194 bleibt und somit ein Klappern und eine Bewegung des Betätigungshebels 56 von dem Lenker 12 weg vermieden werden kann.

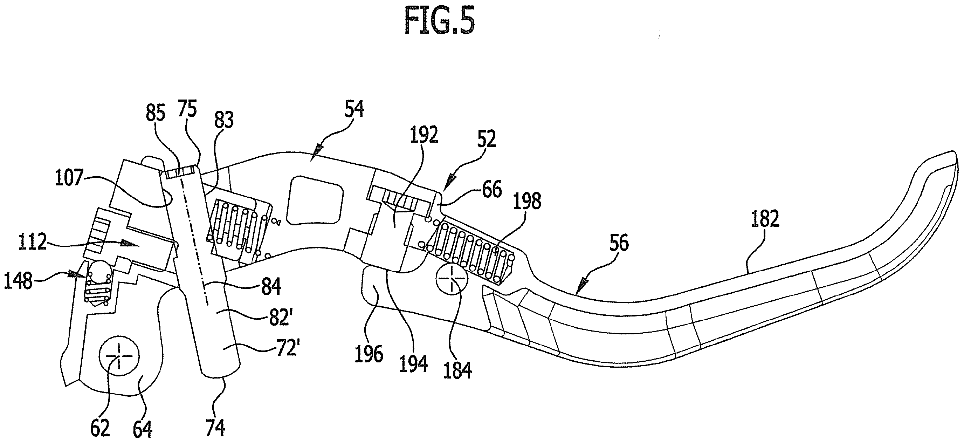

Bei einem zweiten Ausführungsbeispiel einer erfindungsgemäßen Einstelleinrichtung 92', dargestellt in Fig. 5, sind diejenigen Merkmale, die mit denen des ersten Ausführungsbeispiels identisch sind, mit demselben Bezugszeichen versehen, so dass auf die Ausführungen zum ersten Ausführungsbeispiel vollinhaltlich Bezug genommen werden kann.

Im Gegensatz zum ersten Ausführungsbeispiel ist eine variable Einstellung des Leerwegs der Geberzylindereinheit 22 nicht mittels des Anschlagelements 176 vorgesehen, sondern der das Druckelement 72' bildende Stößel 82' ist in seinem die Querbohrung 106 des Führungskörpers 94 durchsetzenden Abschnitt mit einem Außengewinde 83 versehen, das in ein in der Querbohrung 106 vorgesehenes Innengewinde 107 eingreift, so dass durch Drehen des Stößels 82' um die Mittelachse 84 ein Abstand der Druckfläche 74 des Druckelements 72' relativ zum Führungskörper 94 einstellbar ist und dadurch ist auch die Ausgangsstellung des Kolbens 28, durch die der Leerweg der Geberzylindereinheit 22 festgelegt ist, einstellbar.

Zum Verdrehen des Stößels 82', ist dieser vorzugsweise an seinem der Druckfläche 74 abgewandten Ende mit einer Formschlusskontur 85, beispielsweise mit einem Mehrkant, versehen, mit welchem ein mit einem entsprechenden Mehrkant versehenes Werkzeug in Eingriff bringbar ist.

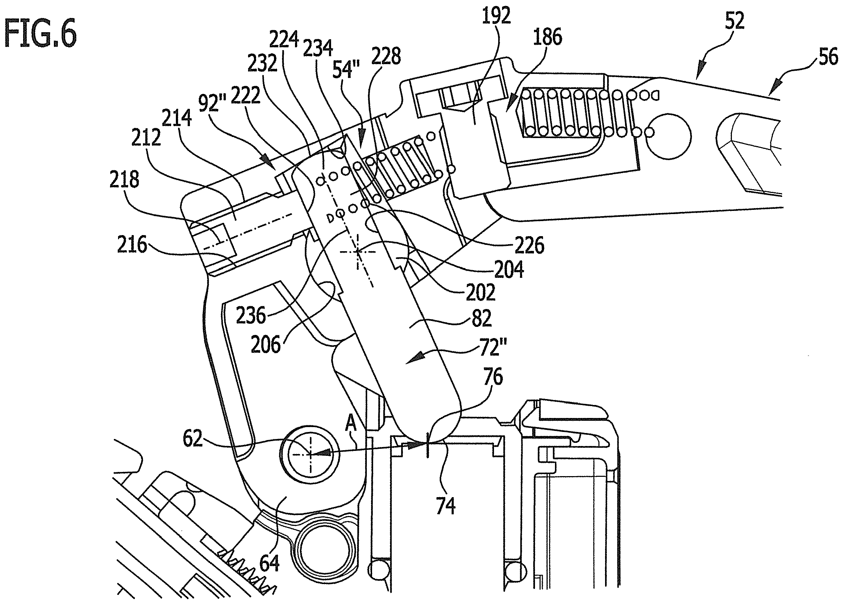

Bei einem dritten Ausführungsbeispiel einer erfindungsgemäßen Gebereinheit 104 mit einer Einstelleinrichtung 92", dargestellt in Fig. 6 sind diejenigen Elemente, die mit denen des voranstehenden Ausführungsbeispiels identisch sind, mit denselben Bezugszeichen versehen, so dass vollinhaltlich auf die Ausführungen hierzu verwiesen wird.

Im Gegensatz zum ersten Ausführungsbeispiel ist bei der Einstelleinrichtung 92" das Druckelement 72" nicht linear in der Führungsrichtung 98 verschiebbar, sondern durch einen Schwenklagerkörper 202 um eine Achse 204 verschwenkbar am Druckhebel 54" gelagert, so dass die Einstellung des Abstandes A der Einwirkungsstelle 76 von der Druckhebelschwenkachse 62 durch Verschwenken der Druckfläche 74 des Druckelements 72 um die Achse 204 erfolgt.

Dabei verläuft die Achse 204 vorzugsweise parallel zur Druckhebelschwenkachse 62 und vorzugsweise ist der Schwenklagerkörper 202 in einer parallel zur Druckhebelschwenkachse 62 verlaufenden Schwenklagerkörperbohrung 206 im Druckhebel 54" verschwenkbar gelagert.

Die Einstellung der Schwenkstellung des Druckelements 72 relativ zum Druckhebel 54" erfolgt durch ein Stellelement 212, das mit einem Außengewindeabschnitt 214 in eine Gewindebohrung 216 in Druckhebel 54" eingreift, wobei eine Mittelachse 218 der Gewindebohrung in einer quer, vorzugsweise senkrecht zur Druckhebelschwenkachse 62 verlaufenden geometrischen Ebene verläuft.

Das Stellelement 212 umfasst eine Anschlagfläche 222, an welcher ein Anschlagarm 224 der Einstelleinrichtung 92" anlegbar ist, so dass dadurch die Schwenkbewegung des Druckelements 72 um die Achse 204 begrenzbar ist.

Der Anschlagarm 224 könnte beispielsweise an den Schwenklagerkörper 202 angeformt sein.

Im dargestellten Ausführungsbeispiel wird der Anschlagarm 224 gebildet durch einen dem Druckelement 72" gegenüberliegenden Fortsatz des Stößels 82, wobei der Fortsatz 224 dadurch gebildet wird, dass der Stößel 82 eine den Schwenklagerkörper 202 quer zur Achse 204 durchsetzende Querbohrung 226 mit einem Führungszapfen 228 durchgreift und durch diesen die Querbohrung 226 durchgreifenden Führungszapfen 228 einerseits mit dem Schwenklagerkörper 202 verbunden ist und andererseits dieser Führungszapfen 228 mit seinem über den Schwenklagerkörper 202 überstehenden Bereich den Anschlagarm 224 bildet.

Vorzugsweise stützt sich der Führungszapfen 228 mit einer Stützfläche 232 an einer Kulissenbahn 234 im Druckhebel 54 ab, so dass durch die Kulissenbahn 234 der Abstand der Druckfläche 74 von der Achse 204 festlegbar ist, wenn der Führungszapfen 228 in Richtung seiner Zapfenachse 236 in der Querbohrung 226 des Schwenklagerkörpers 202 verschiebbar ist.

Die Kulissenbahn 234 ermöglicht es somit, die Lage der Einwirkungsstelle 76 des Druckelements 72" in den verschiedenen Schwenkstellungen des Druckelements so zu korrigieren, dass diese nicht auf einer Kreisbahn um die Achse 204 liegen, sondern beispielsweise ungefähr in der geometrischen Ebene E1 liegen.

## Patentansprüche

1. Gebereinheit (10) für Fahrzeuge, insbesondere für lenkergeführte Fahrzeuge, umfassend ein Gehäuse (14), eine in dem Gehäuse (14) vorgesehene Geberzylindereinheit (22), eine Betätigungseinheit (52) zur manuellen Betätigung der Geberzylindereinheit (22) mit einem relativ zu dem Gehäuse (14) um eine Druckhebelschwenkachse (62) schwenkbaren Druckhebel (54) und mit einem eine Bewegung des Druckhebels (54) auf die Geberzylindereinheit (22) übertragenden Druckelement (72), das an dem Druckhebel (54) vorgesehen ist und das bei der manuellen Betätigung der Betätigungseinheit (52) mit einer Druckfläche (74) an einer Einwirkungsstelle (76) auf eine Einwirkungsfläche (38) der Geberzylindereinheit (22) einwirkt, **dadurch gekennzeichnet , dass** zur Einstellung eines Übersetzungsverhältnisses der Betätigungseinheit (52), mit welchem die Betätigungseinheit (52) auf die Geberzylindereinheit (22) wirkt, ein bei der Betätigung wirksamer Hebelarm zwischen der Einwirkungsstelle (76) und der Druckhebelschwenkachse (62) mittels einer Einstelleinrichtung (92) einstellbar ist, dass die Einstelleinrichtung (92) an der Betätigungseinheit (52) angeordnet ist und dass ein Abstand (A) der Einwirkungsstelle (76) von der Druckhebelschwenkachse (62) mittels der Einstelleinrichtung (92) einstellbar ist.

2. Gebereinheit nach Anspruch 1, **dadurch gekennzeichnet, dass** mittels der Einstelleinrichtung (92) die Druckfläche (74) des Druckelements (72) und die Druckhebelschwenkachse (62) relativ zueinander positionierbar sind und dass insbesondere mittels der Einstelleinrichtung (92) die Lage des Druckelements (72) relativ zum Druckhebel (54) einstellbar ist.

3. Gebereinheit nach einem der voranstehenden Ansprüche, **dadurch gekennzeichnet, dass** mittels der Einstelleinrichtung (92) der Abstand (A) der Einwirkungsstelle (76) von der Druckhebelschwenkachse (62) bei unverändert in einer Ausgangsstellung stehender Geberzylindereinheit (22) einstellbar ist und dass insbesondere eine durch die Druckfläche (74) in der Ausgangsstellung der Geberzylindereinheit (22) beaufschlagbare Einwirkungsfläche (38) der Geberzylindereinheit (22) eine quer zu einer Mittelachse (26) der Geberzylindereinheit (22) verlaufende Fläche ist.

4. Gebereinheit nach einem der voranstehenden Ansprüche, **dadurch gekennzeichnet, dass** die Einstelleinrichtung (92) so ausgebildet ist, dass bei einer Veränderung des Abstandes (A) der Einwirkungsstelle (76) relativ zur Druckhebelschwenkachse (62) die Einwirkungsstelle (76) parallel zur Einwirkungsfläche (38) wandert, wobei die Geberzylindereinheit (22) in ihrer Ausgangsstellung steht.

5. Gebereinheit nach einem der voranstehenden Ansprüche, **dadurch gekennzeichnet, dass** die Einstelleinrichtung (92) im Abstand von der Einwirkungsfläche (38) der Geberzylindereinheit (22) angeordnet ist und dass insbesondere die Einstelleinrichtung (92) auf einer der Geberzylindereinheit (22) abgewandten Seite des Druckelements (72) angeordnet ist und dass sich das Druckelement (72) von der Einstelleinrichtung (92) zur Einwirkungsfläche (38) hin erstreckt.

6. Gebereinheit nach einem der voranstehenden Ansprüche, **dadurch gekennzeichnet, dass** die Einstelleinrichtung (92) einen Führungskörper (94) umfasst, der an einer am Druckhebel (54) vorgesehenen Führungsaufnahme (96) in einer Führungsrichtung (98) bewegbar geführt ist und dass insbesondere die Führungsaufnahme (96) und der Führungskörper (94) eine Linearführung bilden.

7. Gebereinheit nach Anspruch 6, **dadurch gekennzeichnet, dass** die Führungsrichtung (98) parallel zu einer durch die Einwirkungsfläche (38) definierten Fläche (E1) verläuft und dass insbesondere die Führungsrichtung (98) parallel zu einer senkrecht zur Mittelachse (26) des Geberzylinders (22) verlaufenden Ebene (E1) ausgerichtet ist.

8. Gebereinheit nach Anspruch 6 oder 7, **dadurch gekennzeichnet, dass** der Führungskörper (94) durch ein Stellelement (112) in der Führungsrichtung (98) bewegbar ist.

9. Gebereinheit nach Anspruch 8, **dadurch gekennzeichnet, dass** das Stellelement (112) eine Stellspindel (114) umfasst, die mit einem Spindelmutterabschnitt (116) zusammenwirkt und dass insbesondere das Stellelement (112) einen Ringkörper (122) aufweist, der auf den Führungskörper (94) dahingehend einwirkt, dass dieser in der Führungsrichtung (98) definiert positionierbar ist.

10. Gebereinheit nach Anspruch 9, **dadurch gekennzeichnet, dass** der Führungskörper (94) durch den Ringkörper (122) in beiden einander entgegengesetzten und in der Führungsrichtung (98) verlaufenden Bewegungsrichtungen festlegbar ist und dass insbesondere der Ringkörper (122) in einen Ausschnitt (124) des Führungskörpers (94) eingreift.

11. Gebereinheit nach einem der Ansprüche 6 bis 10, **dadurch gekennzeichnet, dass** das Stellelement (112) durch eine Rasteinrichtung (148) in jeder der verschiedenen Stellungen festlegbar ist und dass insbesondere der Ringkörper (122) mindestens eine Rastvertiefung (152) aufweist, in welche mindestens ein Rastelement (154) eingreift.

12. Gebereinheit nach einem der Ansprüche 1 bis 5, **dadurch gekennzeichnet, dass** die Einstelleinrichtung (92") einen am Betätigungshebel (54) gelagerten Schwenklagerkörper (202) umfasst, durch welchen das Druckelement (72") um eine Einstellachse (204) schwenkbar ist und dass insbesondere sich das Druckelement (72") radial zum Schwenklagerkörper (202) erstreckt.

13. Gebereinheit nach Anspruch 12, **dadurch gekennzeichnet, dass** die Schwenkposition des Druckelements (72") um die Einstellachse (204) durch ein auf einen drehfest mit dem Schwenklagerkörper (202) verbundenen Anschlagarm (224) einwirkendes Stellelement (212) festlegbar ist.

14. Gebereinheit nach Anspruch 13, **dadurch gekennzeichnet, dass** der Anschlagarm (224) durch einen den Schwenklagerkörper (202) durchsetzenden Führungszapfen (228) des Druckelements (72') gebildet ist.

15. Gebereinheit nach Anspruch 13 oder 14, **dadurch gekennzeichnet, dass** das Druckelement (72") radial zum Schwenklagerkörper (202) an diesem bewegbar geführt ist, dass insbesondere das Druckelement (72") hinsichtlich seiner Bewegbarkeit radial zum Schwenklagerkörper (202) durch eine am Druckhebel (54) angeordnete Kulissenbahn (234) abgestützt ist und dass insbesondere die Kulissenbahn (234) derart ausgebildet ist, dass die Kulissenbahn (234) das Druckelement derart positioniert, dass die Einwirkungsstelle (76) beim Verändern der Schwenkstellungen sich näherungsweise parallel zu der Einwirkungsfläche (38) bewegt.

## Claims

1. Master unit (10) for vehicles, in particular for vehicles steered by a handlebar, comprising a housing (14), a master cylinder unit (22) provided in the housing (14), an actuation unit (52) for manually actuating the master cylinder unit (22) with a push lever (54) which is pivotable relative to the housing (14) about a push lever pivot axis (62) and with a push element (72) transmitting a movement of the push lever (54) to the master cylinder unit (22), which push element is provided on the push lever (54) and, when the actuation unit (52) is manually actuated, acts, via a pressure surface (74) at a contact point (76), on a contact surface (38) of the master cylinder unit (22), **characterised in that**, in order to adjust a transmission ratio of the actuation unit (52) with which the actuation unit (52) acts on the master cylinder unit (22), a lever arm effective in the event of the actuation is adjustable between the contact point (76) and the push lever pivot axis (62) by means of an adjustment device (92), **in that** the adjustment device (92) is arranged on the actuation unit (52), and **in that** a spacing (A) between the contact point (76) and the push lever pivot axis (62) is adjustable by means of the adjustment device (92).

2. Master unit according to claim 1, **characterised in that** the pressure surface (74) of the push element (72) and the push lever pivot axis (62) are positionable relative to one another by means of the adjustment device (92) and **in that** in particular the position of the push element (72) relative to the push lever (54) is adjustable by means of the adjustment device (92).

3. Master unit according to any one of the preceding claims, **characterised in that** the spacing (A) of the contact point (76) from the push lever pivot axis (62) is adjustable by means of the adjustment device (92) while the master cylinder unit (22) remains unchanged in a starting position and **in that** in particular a contact surface (38) of the master cylinder unit (22), which contact surface can be acted on by the pressure surface (74) in the starting position of the master cylinder unit (22), is a surface extending transversely to a central axis (26) of the master cylinder unit (22).

4. Master unit according to any one of the preceding claims, **characterised in that** the adjustment device (92) is configured such that, when the spacing (A) of the contact point (76) relative to the push lever pivot axis (62) changes, the contact point (76) shifts parallel to the contact surface (38), wherein the master cylinder unit (22) is in its starting position.

5. Master unit according to any one of the preceding claims, **characterised in that** the adjustment device (92) is arranged at a spacing from the contact surface (38) of the master cylinder unit (22) and **in that** in particular the adjustment device (92) is arranged on a side of the push element (72) averted from the master cylinder unit (22), and **in that** the push element (72) extends from the adjustment device (92) to the contact surface (38).

6. Master unit according to any one of the preceding claims, **characterised in that** the adjustment device (92) comprises a guide body (94), which is guided movably in a guide direction (98) on a guide mount (96) provided on the push lever (54) and **in that** in particular the guide mount (96) and the guide body (94) form a linear guide.

7. Master unit according to claim 6, **characterised in that** the guide direction (98) extends parallel to a plane (E1) defined by the contact surface (38) and **in that** in particular the guide direction (98) is oriented approximately parallel to a plane (E1) extending perpendicularly to the central axis (26) of the master cylinder (22).

8. Master unit according to claim 6 or 7, **characterised in that** the guide body (94) is movable in the guide direction (98) by an adjustment element (112).

9. Master unit according to claim 8, **characterised in that** the adjustment element (112) comprises an adjustment spindle (114), which cooperates with a spindle nut portion (116) and **in that** in particular the adjustment element (112) has an annular body (122), which acts on the guide body (94) such that this is postionable in a defined manner in the guide direction (98).

10. Master unit according to claim 9, **characterised in that** the guide body (94) is fixable by the annular body (122) in both movement directions opposite one another and extending in the guide direction (98) and **in that** in particular the annular body (122) engages in a cutout (124) in the guide body (94).

11. Master unit according to any one of claims 6 to 10, **characterised in that** the adjustment element (112) is fixable by a detent device (148) in any of the various positions and **in that** in particular the annular body (122) has at least one detent indentation (152), in which at least one detent element (154) engages.

12. Master unit according to any one of claims 1 to 5, **characterised in that** the adjustment device (92") comprises a pivot bearing body (202), which is mounted on the actuation lever (54) and by means of which the push element (72") is pivotable about an adjustment axis (204) and **in that** in particular the push element (72") extends radially to the pivot bearing body (202).

13. Master unit according to claim 12, **characterised in that** the pivot position of the push element (72") about the adjustment axis (204) is fixable by an adjustment element (212) acting on a stop arm (224) connected to the pivot bearing body (202) for conjoint rotation therewith.

14. Master unit according to claim 13, **characterised in that** the stop arm (224) is formed by a guide pin (228) of the push element (72') passing through the pivot bearing body (202).

15. Master unit according to claim 13 or 14, **characterised in that** the push element (72") is guided movably on the pivot bearing body (202) radially thereto, **in that** in particular the push element (72") is supported in respect of its movability radially to the pivot bearing body (202) by a guide track (234) arranged on the push lever (54) and **in that** in particular the guide track (234) is formed in such a way that the guide track (234) positions the push element in such a way that the contact point (76) when the pivot positions are changed moves approximately parallel to the contact surface (38).

## Revendications

1. Module émetteur (10) pour véhicules, en particulier pour véhicules guidés par un volant, comprenant un boîtier (14), un cylindre émetteur (22) prévu dans le boîtier (14), un module d'actionnement (52) pour l'actionnement manuel du cylindre émetteur (22) avec un levier de pression (54) pouvant pivoter, par rapport au boîtier (14), autour d'un axe de pivotement de levier de pression (62) et avec un élément de pression (72) transmettant un mouvement du levier de pression (54) au cylindre émetteur (22) et prévu sur le levier de pression (54) et, lorsque le module d'actionnement (52) est actionné manuellement, agissant sur une face d'action (38) du cylindre émetteur (22) avec une face de pression (74) disposée sur une zone d'action (76), **caractérisé en ce que**, pour régler un rapport de changements du module d'actionnement (52) permettant à ce module d'actionnement (52) d'agir sur le cylindre émetteur (22), un bras de levier, actif lors de l'actionnement, peut être réglé, au moyen d'un dispositif de réglage (92), entre la zone d'action (76) et l'axe de pivotement du levier de pression (62), **en ce que** le dispositif de réglage (92) est disposé sur le module d'actionnement (52) et **en ce qu'**une distance (A) entre la zone d'action (76) et l'axe de pivotement de levier de pression (62) peut être réglée au moyen du dispositif de réglage (92).

2. Module émetteur selon la revendication 1, **caractérisé en ce que** la face de pression (74) de l'élément de pression (72) et l'axe de pivotement de levier de pression (62) peuvent être positionnés l'un par rapport à l'autre au moyen du dispositif de réglage (92) et **en ce que**, en particulier, la position de l'élément de pression (72) peut être réglée par rapport au levier de pression (54) au moyen du dispositif de réglage (92).

3. Module émetteur selon l'une quelconque des revendications précédentes, **caractérisé en ce que** la distance (A) entre le point d'action (76) et l'axe de pivotement de levier de pression (62) peut être réglée au moyen du dispositif de réglage (92) lorsque le cylindre émetteur (22) est dans une position de départ inchangée, et **en ce que**, en particulier, une face d'action (38), pouvant être sollicitée par la face de pression (74) lorsque le cylindre émetteur (22) est en position de départ, du cylindre émetteur (22) est une face perpendiculaire à un axe médian (26) du cylindre émetteur (22).

4. Module émetteur selon l'une quelconque des revendications précédentes, **caractérisé en ce que** le dispositif de réglage (92) est conçu de telle manière que la zone d'action (76) vient se positionner en parallèle à la face d'action (38) en cas de modification de la distance (A) entre la zone d'action (76) et l'axe de pivotement du levier de pression (62), alors que le cylindre émetteur se trouve dans sa position de départ.

5. Module émetteur selon l'une quelconque des revendications précédentes, **caractérisé en ce que** le dispositif de réglage (92) est disposé à distance de la face d'action (38) du cylindre émetteur (22), et **en ce que**, en particulier, le dispositif de réglage (92) est disposé sur un côté de l'élément de pression (72) opposé au cylindre émetteur (22), et **en ce que** l'élément de pression (72) part du dispositif de réglage (92) vers la face d'action (38).

6. Module émetteur selon l'une quelconque des revendications précédentes, **caractérisé en ce que** le dispositif de réglage (92) comprend un corps de guidage (94) pouvant être déplacé, tout en état guidé contre un logement de guidage (96), prévu sur le levier de pression (54), dans un sens de guidage (98), et **en ce que**, en particulier, le logement de guidage (96) et le corps de guidage (94) forment un guide linéaire.

7. Module émetteur selon la revendication 6, **caractérisé en ce que** le sens de guidage (98) est parallèle à une face (E1) définie par la face d'action (38), et **en ce que**, en particulier, le sens de guidage (98) est parallèle à un plan (E1) perpendiculaire à l'axe médian (26) du cylindre émetteur (22).

8. Module émetteur selon la revendication 6 ou la revendication 7, **caractérisé en ce que** le corps de guidage (94) peut être déplacé par un élément d'ajustement (112) dans le sens de guidage (98).

9. Module émetteur selon la revendication 8, **caractérisé en ce que** l'élément d'ajustement (112) comprend une broche d'ajustement (114) qui coopère avec un tronçon d'écrou de broche (116), et **en ce que**, en particulier, l'élément d'ajustement (112) présente un corps annulaire (122) qui agit sur le corps de guidage (94) de telle manière que celui-ci puisse être positionné de manière définie dans le sens de guidage (98).

10. Module émetteur selon la revendication 9, **caractérisé en ce que** le corps de guidage (94) peut être immobilisé, par le corps annulaire (122) dans les deux sens de déplacement opposés et allant dans le sens de guidage (98), et **en ce que**, en particulier, le corps annulaire (122) s'engrène dans une découpe (124) du corps de guidage (94).

11. Module émetteur selon l'une quelconque des revendications 6 à 10, **caractérisé en ce que** l'élément d'ajustement (112) peut être immobilisé dans chacune des différentes positions par un dispositif d'encliquetage (148), et **en ce que**, en particulier, le corps annulaire (122) présente au moins un creux d'encliquetage (152) dans lequel au moins un élément d'encliquetage (154) s'encliquète.

12. Module émetteur selon l'une quelconque des revendications 1 à 5, **caractérisé en ce que** le dispositif de réglage (92") comprend un palier pivotant (202) positionné sur le levier d'actionnement (54), palier grâce auquel l'élément de pression (72") peut pivoter autour d'un axe de réglage (204), et **en ce que**, en particulier, l'élément de pression (72") s'étend radialement au palier pivotant (202).

13. Module émetteur selon la revendication 12, **caractérisé en ce que** la position de pivotement de l'élément de pression (72") autour de l'axe de réglage (204) peut être fixée par un élément d'ajustage (212) agissant sur un bras de butée (224) relié, de manière fixe en rotation, au palier pivotant (202).

14. Module émetteur selon la revendication 13, **caractérisé en ce que** le bras de butée (224) peut être formé par un téton de guidage (228), traversant le palier pivotant (202), de l'élément de pression (72').

15. Module émetteur selon la revendication 13 ou la revendication 14, **caractérisé en ce que** l'élément de pression (72") peut être déplacé, tout en étant guidé, sur le palier pivotant (202) radialement à celui-ci, **en ce que**, en particulier, l'élément de pression (72") est soutenu, en ce qui concerne sa mobilité radialement au palier pivotant (202), par une coulisse (234) disposée sur le levier de pression (54), et **en ce que**, en particulier, la coulisse (234) est conçue de manière à positionner l'élément de pression pour que la zone d'action (76) se déplace de manière approximativement parallèle à la face d'action (38) lors de la modification des positions de pivotement.
